# EUROPÄISCHE PATENTSCHRIFT

(11) **EP 1 309 146 B1**
(45) Veröffentlichungstag und Bekanntmachung des Hinweises auf die Patenterteilung: **01.01.2014**
(21) Anmeldenummer: 01126246.6
(22) Anmeldetag: 05.11.2001
(51) Int. Cl.: H04L 29/06, H04M 17/00, H04L 12/14

(54) **Verfahren zur Kommunikation zweier Netzeinrichtungen auf Basis einer Ende-zu-Ende-Verbindung und Netzeinrichtung dafür**
Method of communication between two network devices based on an end-to-end connection and network device adapted to carry out the method
Procédé de communication entre deux dispositifs de réseau basée sur une connection de bout en bout et dispositif adapté au procédé

(43) Veröffentlichungstag der Anmeldung: 07.05.2003
(73) Patentinhaber: Siemens Aktiengesellschaft, 80333 München (DE)
(72) Erfinder: Mayer, Georg, 83714 Miesbach (DE)

(56) Entgegenhaltungen:
- EP-A- 0 905 961
- EP-A- 1 134 962
- WO-A-01/35605
- BHATIA M: "3pcc using the REFER method" INTERNET DRAFT, [Online] 16. Oktober 2001 (2001-10-16), Seiten 1-7, XP002200562 Gefunden im Internet: <URL:http://ftp.de/pub/rfc/internet-drafts /draft-bhatia-3pcc-refer-01.txt> [gefunden am 2002-05-29]
- ZWART R ET AL.: "[Simple] Questions on draft-rosenberg-impp-presence-01 (was: RE: [SIP] Informing UA after network initiated deregistration?)" SIP IMPLEMENTOR'S MAILING LIST, [Online] 23. März 2001 (2001-03-23), Seiten 1-4, XP002200563 Gefunden im Internet: <URL:http://mailman.dynamicsoft.com/piperm ail/simple/2001-March/000111.html> [gefunden am 2002-05-29]

## Beschreibung

Die Erfindung bezieht sich auf ein Verfahren zur Kommunikation zweier Netzeinrichtungen auf Basis einer Ende-zu-Ende-Verbindung mit den oberbegrifflichen Merkmalen des Patentanspruchs 1 bzw. Netzeinrichtungen dafür.

Bei paketorientierten Netzen mit einer Teilnehmerorientierten Struktur sind Verbindungsprotokolle bekannt, die spezielle Ende-zu-Ende-Verbindungen zwischen zwei miteinander kommunizierenden Stationen bzw. Endpunkten ermöglichen, bei denen ausschließlich die Endpunkte - im Gegensatz zu den Netzelementen - Signalisierungs-Nachrichten generieren können.

Beispielhaft für ein derartiges Protokoll ist das sogenannte Session Initiation Protocol (SIP (Sitzungsinitialisierungsprotokoll)), das im RFC2543bis-05 Draft der IETF Internet Engineering Task Force)beschrieben ist. Das SIP erlaubt nur den Aufbau von Ende-zu-Ende-Verbindungen, bei denen in den Kopfabschnitten von zu übertragenden Datenpaketen eine feste Ruf-Identifizierungskennung bzw. Call-ID sowie feste Zu- und Von-Kopfabschnittsinformationen bzw. To und From Header eingetragen sind. Eine Verbindung bzw. darüber zu übertragende Datenpakete werden somit aus der Kombination To/From/Call-ID-Kopfabschnitten eindeutig festgelegt.

Zusätzlich wird bei SIP jeder Nachricht, die auf einer solchen Verbindung in eine Richtung gesendet wird, eine fortlaufende, sich erhöhende Nummer zugewiesen, die sogenannte CSeq. Aus diesem Grund können Netzelemente zwischen den Endpunkten keine Nachrichten auf einer bestehenden Call-ID senden, da die sich erhöhende Nummer sonst aus der Synchronisation laufen würden.

SIP erlaubt daher ausschließlich den Endpunkten einer Verbindung, neue Nachrichten zu senden. Ein zwischen Endpunkten liegendes Netzelement ("Proxy") kann somit nicht über die gleiche Verbindung mit einem der Endpunkte oder einem anderen Netzelement dazwischen kommunizieren. Zwischen diesen Endpunkten befindliche Netzelemente, die also keine Endpunkte der Verbindung darstellen, haben folglich keine oder nur bedingte Berechtigung zur Manipulation der Verbindung oder der auf ihr gesendeten Nachrichten.

Bei SIP wird davon ausgegangen, dass im Netz besondere angebotene Dienste bei Anwendungsservern bereit gestellt werden, die dann einen Endpunkt einer speziellen Verbindung zwischen dem Dienstnutzer und dem Anwendungsserver darstellen müssen.

Bei Tele-Kommunikationsnetzen gemäß z.B. dem von der 3GPP spezifizierten IMS (3GPP IMS: 3rd Generation Partnership Project Internet Multimedia Subsystem) sind hingegen auf diesen Vorstellungen aufbauende Dienste geplant. Im 3GPP IMS gibt es für jeden Teilnehmer einen Heimat- bzw. Home-Proxy, der die Basissteuerung für die Rufe, Registrierung, Authentifizierung etc. des Teilnehmers übernimmt. An diesem Home-Proxy, der auch als dienende Verbindungszustands- und/oder Dienstezustands-Steuerfunktion S-CSCF (Serving Call State Control Function) bezeichnet wird, sind über SIP auch alle Anwendungs-Server angeschlossen, die dieser Teilnehmer nutzen kann bzw. darf.

Kritisch sind z.B. Pre-Paid-Anwendungs-Server, die vorbezahlte, sogenannte Pre-Paid-Karten und Konten verwalten. Alle Rufe eines Teilnehmers werden über den Home-Proxy zum Pre-Paid-Server geleitet und von dort wieder zurück zum Home-Proxy, damit dieser die Verbindung gegebenenfalls an weitere Server weiterleiten kann. Dabei gibt es Lösungen, bei denen der Pre-Paid-Server selbst nicht die Budgetverwaltung für jede Ruf des Teilnehmers steuert sondern lediglich den Kontostand bekannt gibt und es dem Home-Proxy erlaubt, einen Teilbetrag von diesem Konto abzubuchen. Dieses Geld kann dann vom User verbraucht werden. Geht der Teilbetrag zur Neige fordert der Home-Proxy neue Beträge vom Pre-Paid-Server an. Ist auch dort kein Geld mehr vorhanden, teilt dieser dem Home-Proxy mit, den Call auszulösen. Problematisch ist dies jedoch bei reinen Endpunkt-zu-Endpunkt-Verbindungen, da für die Auslösung bzw. Beendigung der Hauptverbindung ein entsprechender Eingriff von einem zwischen oder abseits der Endpunkte liegenden Proxy vorgenommen werden müsste, was jedoch aus vorstehenden Gründen nicht möglich ist. Insbesondere kann keine sogenannte BYE-Nachricht zum Auslösen einer Verbindung abgesendet werden. Darüberhinaus ist auch bereits die Kommunikation zwischen dem Home-Proxy und dem Pre-Paid-Server über die Call-ID der Endepunkt-zu-Endpunkt-Verbindung nicht möglich.

In vielen Fällen ist daher eine Generierung von Nachrichten durch Netzelemente wünschenswert. Ein Beispiel ist eine solche Vergebührung von Rufen, welche für gewöhnlich von mehreren Netzelementen durchgeführt wird, die notwendigerweise untereinander auf Basis einer bestehenden Ende-zu-Ende-Verbindung kommunizieren müssen ohne dass die dafür generierten Nachrichten zwingend an die Endpunkte weitergeleitet werden.

Weiterhin wäre es in einigen Netzen vorteilhaft, wenn Netzelemente bestehende Verbindungen zwischen zwei Endpunkten auslösen können.

Eine mögliche Lösung des Problems wäre ein sogenannter Backto-Back-User-Agent (B2BUA), der aber in seiner Implementierung sehr aufwendig ist und den Aufbau und die Abwicklung von Rufen unnötig verlangsamt.

Eine weitere alternative Lösung wäre die Verwendung der sogenannten REFER-Nachricht. Über diese Nachricht kann ein Netzelement in einer speziellen Verbindung ein Endgerät dazu auffordern, eine bestimmte, vom Netzelement festgelegte SIP-Nachricht für eine eindeutig identifizierte Verbindung zu senden. Über diesen Mechanismus kann ein Netzelement ein Endgerät dazu auffordern, eine BYE-Nachricht zu senden. Aus Sicherheitsgründen, z.B. zur Vermeidung von Manipulationsmöglichkeiten von Endgeräten durch den Benutzer, ist es in einigen Netzumgebungen, z.B. 3GPP IMS notwendig, dass die Verbindungsauslösungs-Nachricht (BYE) in diesen Fällen nicht vom Endgerät erwartet wird.

Aus der Druckschrift EP1134962A1 ist ein Verfahren zum Erfassen von Kosten in einem Kommunikationsnetz bekannt. Hierzu baut ein sog. Service Switching Point Verbindungen zu einem Dienstanbieter und einem Kontoknoten auf.

Weiterhin ist ein Verfahren zur Vergebührung von Internet-Diensten aus dem Dokument EP0905961A2 bekannt. Hierbei wird bei Zugriff auf einen Internet-Dienst zwischen diesem und einer Diensteinheit eine zusätzliche Steuerverbindung aufgebaut, über die Gebührendaten übertragen werden.

Ferner ist aus dem Internet-Draft "3pcc using the REFER method" von M. Bhatia vom 16. Okober 2001 bekannt, mittels einer sog. REFER-Nachricht ein Endgerät dazu aufzufordern eine SIP-Nachricht für eine eindeutig identifizierte Verbindung zu senden.

Aus dem Thread der SIP Implementor's Mailing List "[Simple] Questions on draft-rosenberg-impp-presence-01 (was: RE: [SIP] Informing UA after network initiated deregistration?)" von R. Zwart et al. vom 23. 3. 2001 ist darüber hinaus die Verwendung eines Registrars als SIP-Proxy bekannt.

Den vorgenannten Dokumenten ist jedoch kein Hinweis auf die oben diskutierte, bei SIP-Verbindungen auftretende Problematik zu entnehmen.

Die Aufgabe der Erfindung besteht darin, ein Verfahren vorzuschlagen, das Kommunikationen zwischen Netzeinrichtungen einer reinen Endpunkt-zu-Endpunkt-Verbindung ermöglicht, wobei zumindest eine dieser Netzeinrichtungen keiner der Endpunkte ist.

Diese Aufgabe wird durch das Verfahren zur Kommunikation von Netzeinrichtungen auf Basis einer Ende-zu-Ende-Verbindung mit den Merkmalen des Patentanspruchs 1 bzw. eine Netzeinrichtung dafür mit den Merkmalen des Patentanspruchs 6 gelöst.

Vorteilhafte Ausgestaltungen sind Gegenstand von abhängigen Ansprüchen.

Unter Netzeinrichtung sind dabei verschiedenartigste Einrichtungen und Netzelemente zu verstehen, insbesondere eigenständige Datenendgeräte, Server, Telefone, Computer, Netzschnittstellen und dergleichen. Die Verbindungen können leitungsgebundene oder funkgestützte Verbindungen sein.

Das Verfahren ermöglicht die Korrelation zweier Ende-zu-Ende-Verbindungen in einem Paket-basierten Netz. Das verwendete Verbindungsprotokoll ist dabei ein Ende-zu-Ende-Protokoll, d.h. Netzelemente, die keine Endpunkte der Verbindung darstellen, haben für gewöhnlich nur bedingte Berechtigung zur Manipulation der eigentlichen Verbindung oder der auf ihr gesendeten Nachrichten.

Die Korrelation von zwei Ende-zu-Ende-Verbindungen ist dabei unabhängig vom Zweck der Korrelation möglich. Eine unabhängige Kommunikation von Netzelementen ist auf Basis einer bereits parallel bestehenden Haupt-Verbindung oder auf Basis neu aufzubauender Verbindungen möglich. Insbesondere ist für die Kommunikation von Netzelementen auch die Verwendung eines eigenen, insbesondere neuen Verbindungstyps möglich.

Besonders vorteilhaft und von eigenständigem erfinderischen Gehalt ist auch die Möglichkeit des Auslösens, d.h. Beendens einer Ende-zu-Ende-Verbindung zwischen zwei Endpunkten durch ein Netzelement zwischen diesen.

Beim Anfordern der Korrelierung der weiteren Verbindung mit der ersten Verbindung eine Anweisung zu übertragen, welche die empfangende Netzeinrichtung anweist, die Verbindung nicht anzunehmen bzw. nicht aufzubauen, wenn die Funktionalität der Verbindungs-Korrelation von der empfangenen Netzeinrichtung nicht unterstützt wird, ist besonders vorteilhaft, da dadurch falsche Interpretationen bzw. Auswertungen vermieden werden. Dazu können bei SIP dort für sich bekannte Mechanismen verwendet werden.

Eine Netzeinrichtung zum Durchführen eines solchen Verfahrens weist vorzugsweise zumindest eine Schnittstelle zum Aufbauen von zumindest zwei voneinander unabhängigen Verbindungen und eine Steuereinrichtung zum Verarbeiten und/oder Bereitstellen von über die Verbindungen übertragenen bzw. zu übertragenden Informationen und/oder Anweisungen und zum Steuern des Funktionen der Netzeinrichtung auf, wobei die Steuereinrichtung die Informationen und/oder Anweisungen auf einer der Verbindungen unter Bezug auf die andere Verbindung verarbeitet bzw. bereitstellt.

Insbesondere ist mit diesen Verfahren und Netzeinrichtungen der Aufbau von Vergebührungssystemen möglich, bei denen die eigentlichen Vergebührungseinrichtungen nicht direkt bei oder in den Netzeinrichtungen bereit stehen müssen.

Ausführungsbeispiele werden nachfolgend anhand der Zeichnung näher erläutert. Es zeigen:
- Fig. 1: zwei Endpunkte und eine Vielzahl von dazwischen angeordneten Netzelementen gemäß einem ersten Ausführungsbeispiel für eine Kommunikation zwischen solchen Netzelementen über eine zur Hauptverbindung korrelierte Verbindung;
- Fig. 2: ein dazu alternatives Ausführungsbeispiel und
- Fig. 3: eine derartige Anordnung mit einem Netzelement, welches eine Verbindung zwischen den Endpunkten beenden lässt.

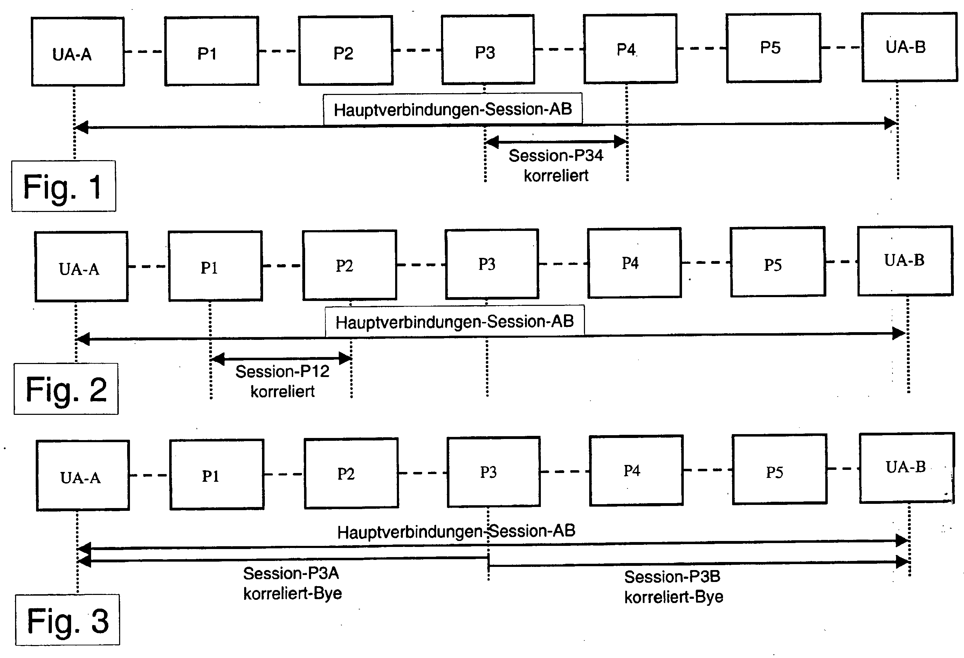

Wie aus Fig. 1 ersichtlich, findet eine Kommunikation in einem Netz zwischen zwei Endpunkten UA-A und UA-B gemäß einem Ende-zu-Ende-Protokoll statt, wobei eine Verbindung, nachfolgend auch als Session-AB bezeichnet, über eine Vielzahl dazwischen liegender Netzelemente P1 - P5 führt. Die Netzelemente P1 - P5 können nicht direkt auf die Verbindung Session-AB einwirken bzw. keine eigenen Datenpakete auf dieser Verbindung Session-AB versenden. Die Endpunkte UA-A, UA-B und die Netzelemente P1 - P5 können dabei je nach Netztyp verschiedenartigste Einrichtungen sein, z.B. zellulare Funkstationen, Datenserver, vernetzte Computer, Proxys und/oder Netzknoten zur Verwaltung und Steuerung von Netzressourcen. Die nachfolgende Unterscheidung zwischen Endpunkten und Netzelementen dient lediglich zur einfacheren Unterscheidbarkeit.

Als Beispiel für ein derartiges Ende-zu-Ende-Protokoll sei das SIP aufgeführt, bei dem in den Kopfabschnitten von zu übertragenden Datenpaketen die feste Ruf-Identifizierungskennung bzw. Call-ID sowie feste Zu- und Von-Kopfabschnittsinformationen bzw. To und From Header eingetragen werden. Zusätzlich wird bei jeder Nachricht bzw. jedem Datenpaket eine fortlaufende, sich erhöhende Nummer im Kopfabschnitt eingetragen, die sogenannte CSeq.

Gemäß dem ersten Ausführungsbeispiel soll vom Endpunkt UA-A ausgehend eine Verbindung Session-AB zwischen den beiden Endpunkten UA-A und UA-B aufgebaut werden. Dazu ruft der erste Endpunkt UA-A den zweiten Endpunkt UA-B, woraufhin die gewünschte Verbindung Session-AB über die Netzelemente P1, P2, P3, P4 und P5 aufgebaut wird. Die Netzelemente P1 - P5, sogenannte Proxys, erzwingen, dass alle Nachrichten bzw. Datenpakete der Verbindung Session-AB über sie weitergeleitet werden. Dazu tragen sie sich bei der ersten Verbindungsanforderung, bei SIP einer sogenannten INVITE-Nachricht bzw. einem INVITE-Protokollelement, in den Datensatz-Leitinformation-Aufzeichnungs-Kopfabschnitt bzw. Record-Route Header ein. Die Verbindung Session-AB wird mit den Methoden des verwendeten Signalisierungsprotokolls aufgebaut, im Falle von SIP dem Senden von INVITE, Abwarten einer sogenannten 200 OK-Nachricht und dem Senden einer Bestätigungsnachricht der sogenannten ACK-Nachricht.

Anstelle der Eintragung der einzelnen Netzelementadressen in den Datensatz-Leitinformations-Kopfabschnitt können auch entsprechende Informationen, z.B. die Verbindungs-Identifizierungsinformation Call-ID mit Absender- und Zieladresse in einem entsprechenden Speicher der Netzelemente P1 - P5 eingetragen und beim späteren Eintreffen von Datenpaketen zu deren Weiterleitung verwendet werden.

Die Verbindung Session-AB wird bei SIP durch folgende beispielhaften Daten im Kopfabschnitt von Datenpaketen eindeutig identifiziert:
From: ua-a@home1.net;tag=123
To: ua-b@home2.net;tag=456
Call-ID: session-ab@home1.net
UA-A --- P1 ---- P2 ---- P3 ---- P4 ---- P5 ---- UA-B.

Dabei beinhaltet die Von- bzw. From-Information die Adresse des ersten Endpunktes UA-A, von dem das Datenpaket stammt, hier im Format einer Internetadresse, und ein sogenanntes Tag, also eine Kennzeichnung in Art einer Fahne bzw. eines Etiketts. Die Zu- bzw. To-Information beinhaltet die Zieladresse, also die Adresse des zweiten Endpunkts UA-B. Das Tag der To-Adresse wird dabei vom Zielknoten generiert und angefügt. Dies geschieht, um verschiedene aufgesplittete (forked) Verbindungen, die aus einer Verbindung hervorgingen, eindeutig voneinander unterscheiden zu können. Die Ruf-Identifizierungsinformation Call-ID dient zum Zuordnen des Datenpakets zu einer bestimmten Verbindung, hier also der Verbindung Session-AB. Außerdem wird im Kopfabschnitt beim dargestellten Beispiel eine Information über die einzelnen Stationen und Netzelemente P1 - P5 auf der Verbindung Session-AB mitgeführt.

Beim vorliegenden Ausführungsbeispiel soll nun zwischen den Netzelementen P3 und P4 ein Austausch von Nachrichten stattfinden, wobei die Nachrichten einen direkten Bezug zu der Verbindung Session-AB haben, aber aufgrund der SIP-Beschränkungen nicht direkt über die Verbindung Session-AB übertragen werden können.

Um den Nachrichtenaustausch zu ermöglichen, baut das erste (in der Fig. das dritte von links) dieser Netzelemente P3 eine neue Verbindung zum zweiten (in der Fig. dem vierten von links) dieser Netzelemente P4 auf. Beim Verbindungsaufbau werden zusammen mit den üblichen Informationen, insbesondere Kopfabschnittinformationen, Zusatzinformationen übertragen, die eine Korrelation mit der Verbindung Session-AB herstellen. Dabei handelt es sich bei beispielsweise einer Umsetzung bei SIP um-neue Protokollerweiterungen-gegenüber dem derzeitigen Protokoll.

Zusätzlich kann der Kopfabschnitt beim Verbindungsaufbau mittels z.B. der INVITE-Nachricht gemäß SIP vorteilhafterweise ein Feld (Require: Header) enthalten, welches das zweite Netzelement P4 anweist, die Verbindung nicht anzunehmen, wenn die Funktionalität der Verbindungs-Korrelation nicht unterstützt wird. Die Korrelations-verbindung zwischen den beiden Netzelementen P3 und P4 wird nachfolgend auch als Session-P34 bezeichnet.

Die Verbindung Session-P34 wird dann beispielsweise durch folgende Daten im Kopfabschnitt von Datenpaketen eindeutig identifiziert:
INVITE p4.home1.net
From: p3.home1.net;tag=789
To: p4.homel.net
Call-ID: session-p34@p3.homel.net
Require: correlate
Correlate-From: ua-a@homel.net;tag=123
Correlate-To: ua-b@home2.net;tag=456
Correlate-Call-ID: session-ab@home1.net

Dabei folgt der INVITE-Nachricht die Adresse oder der Name des gerufenen Netzelements P4. Die Felder From, To und Call-ID sind entsprechend dem vorstehenden Kopfabschnittsbeispiel mit hier den Daten der beiden Netzelemente P3 bzw. P4 belegt.

Es folgt ein Block mit zusätzlichen Informationen, die zum Korrelieren der neu aufzubauenden Verbindung Session-P34 mit der bestehenden Verbindung Session-AB dienen. Diese Informationen sind vorzugsweise eine Anforderung "Require" der Korrelation "correlate" mit einer anderen Verbindung, Daten, insbesondere Adressen der Endpunkte UA-A und UA-B der zu korrelierenden Verbindung Session-AB und eine Korrelierungs-Ruf-Identifizierungsinformation Correlate-Call-ID zum Zuordnen des Datenpakets zu der bestimmten Korrelations-verbindung Session-P34.

Natürlich sind auch andere Arten von Informationen einsetzbar, sofern diese eine eindeutige Zuordnung der Datenpakete zu einerseits der parallelen Verbindung Session-P34 und andererseits der Hauptverbindung Session-AB ermöglichen. Im einfachsten Fall reicht auch ein einziges Feld, z.B. die Korrelierungs-Ruf-Identifizierungsinformation Correlate-Call-ID, wenn entsprechende Verbindungs- und/oder Zuordnungsdaten in den einzelnen Netzelementen P1 - P5 und/oder den Endpunkten UA-A, UA-B bereitstehen.

Nach dem Empfang der Verbindungsanforderung "INVITE P4.home1.net" führt das zweite Netzelement P4 den Verbindungsaufbau nun zu Ende und sendet eine positive Antwort an das erste Netzelement P3 zurück. Die Antwort, bei SIP z.B. eine "200 OK"-Nachricht kann dann beispielsweise durch folgende Daten im Kopfabschnitt eindeutig identifiziert werden, wobei die Inhalte entsprechend den vorstehenden Kopfabschnitten belegt sind:
200 OK
From: p3.homel.net;tag=789
To: p4.home1.net;tag=098
Call-ID: session-p34@p3.homel.net
Correlate-From: ua-a@home1.net;tag=123
Correlate-To: ua-b@home2.net;tag=456
Correlate-Call-ID: session-ab@home1.net.

Dadurch sind die beiden Verbindungen Session-AB und Session-P34 miteinander verbunden.

Nachrichten die nun auf Session-P34 zwischen den beiden Netzelementen P3 und P4 ausgetauscht werden, sind nun von allen beteiligten Netzelementen als zusätzliche Bestandteile von Session-AB zu sehen.

Insbesondere werden beide Verbindungen Session-AB und Session-P34 unabhängig voneinander mit entsprechenden Nachrichten, bei SIP BYE-Nachrichten, ausgelöst bzw. beendet.

Neben der Möglichkeit, zu einer bestehenden Verbindung Session-AB eine neue Verbindung über zumindest einen Teil der Strecke parallel aufzubauen, ist es z.B. auch möglich, zwei bestehende Verbindungen im Nachhinein zu korrelieren, wie dies anhand des zweiten Ausführungsbeispiels unter Bezug auf Fig. 2 dargelegt wird.

Bestehen bereits zwei unabhängige Verbindungen, so kann eine neue Nachricht, die bei SIP ebenfalls einer entsprechenden Protokollerweiterung bedarf, auf einer der beiden Verbindungen gesendet werden.

Beim SIP könnte diese Verfahrensweise bzw. eine entsprechende Nachricht z.B. als CORRELATE bezeichnet werden. Um zwei unabhängige Verbindungen Session-AB und Session-P34 miteinander zu korrelieren würde dann auf einer der beiden Verbindungen Session-AB bzw. Session-P34 eine Nachricht übertragen, die z.B. folgende Informationen enthält, die wieder entsprechend den vorstehend beschriebenen Beispielen mit Daten belegt werden:
CORRELATE p2.home2.net
From: p1.home1.net;tag=898
To: p2.home2.net;tag=767
Call-ID: session-p12@home1.net
Correlate-From: ua-a@home1.net;tag=123
Correlate-To: ua-b@home2.net;tag=456
Correlate-Call-ID: session-ab@home1.net

Auch bei diesem Beispiel werden die beiden Verbindungen vorzugsweise wieder unabhängig voneinander ausgelöst.

Alternativ oder zusätzlich können auch Verbindungen unterschiedlichen Typs miteinander korreliert werden. So kann eine Verbindung, die über INVITE aufgebaut wurde, mit einer Verbindung, die mit SUBSCRIBE aufgebaut wurde, korreliert werden. Die SUBSCRIBE-Nachricht erlaubt bei SIP, dass sich ein Benutzer bei einem Anwendungsserver für die Zustellung bestimmter ereignisabhängiger Informationen (Events) anmeldet (subskribiert). Tritt ein Ereignis ein, für das der Benutzer sich angemeldet hat, so benachrichtigt der Anwendungsserver den Benutzer über eine NOTIFY-Nachricht, die zusätzliche Ereignisinformationen enthalten kann.
Auch bei diesem Beispiel werden die beiden Verbindungen vorzugsweise wieder unabhängig voneinander ausgelöst bzw. laufen unabhängig voneinander aus.

Gemäß einem weiteren Ausführungsbeispiel kann die in der ersten Alternative beschriebene CORRELATE-Methode zur nachträglichen Korrelierung zweier oder mehr bestehender Verbindungen auch dazu verwendet werden, einen eigenen Verbindungstyp zu initiieren. Dies wäre analog zu anderen für sich bekannten SIP-requests bzw. SIP-Anforderungen, wie z.B. INVITE (Verbindungsaufbau für parallele Medienströme), SUBSCRIBE (Anmeldung für Ereignis-Informationen), REGISTER (Bekanntgabe des momentanen Aufenthaltsortes des Benutzers, d.h. die Adresse des Endgerätes, an dem er sich angemeldet hat), MESSAGE (Kurznachrichten per Instant-Messaging) oder REFER (Anrufumleitung und Anfordern von individuellen SIP-Nachrichten). möglich. Diese Art des Verbindungsaufbaus würde besonders dann bevorzugt, wenn die Zusatzverbindung rein auf Signalisierungsebene abgehandelt werden kann und keine SIP-Methoden benötigt, die eine Übertragung ausschließlich innerhalb von anderen Verbindungstypen zulassen, wie z.B. die aus SIP bekannte INFO-Methode, die zur Signalisierung von Zusatzinformation während einer bereits aufgebauten Verbindung dient.

Für diese Alternative werden nachfolgend drei beispielhafte Auslösemechanismen zum Beenden der Verbindungen und/oder Korrelationen vorgestellt:

Beispielsweise ist ein automatisches Auslösen der CORRELATE-Verbindung möglich, wenn die Hauptverbindung Session-AB, auf die sich die CORRELATE-Verbindung Session-P34 bezieht, auch ausgelöst wird. Diese Vorgehensweise wird bevorzugt. Wurde die Hauptverbindung gemäß SIP z.B. mit INVITE aufgebaut, so löst die auf der Hauptverbindung Session-AB übertragene SIP-Anweisung BYE / 200 OK auch die korrelierte CORRELATE-Verbindung Session-P34 aus.

Bezieht sich die CORRELATE-Verbindung auf eine SUBSCRIBE-Verbindung, so wird die CORRELATE-Verbindung vorzugsweise automatisch bei Ablauf des Zeitgebers für die gültige Verbindungsdauer bzw. des sogenannten SUBSCRIBE-Expires-Timers ausgelöst.

Falls die korrelierte Verbindung Session-P34 mit der CORRELATE-Anweisung in Verbindung mit Verlaufkopfabschnitten bzw. sogenannten Expires Header aufgebaut wird, so wird sie damit unabhängig von der Hauptverbindung beim Ablauf des Zeitgebers für die gültige Verbindungsdauer bzw. des Expires-Timer ausgelöst.

Gemäß einem besonders bevorzugten Ausführungsbeispiel, das anhand Fig. 3 veranschaulicht ist, ist auch ein vom Netz bzw. dessen Netzelementen P1 - P5 initiiertes Verbindungs-Auslösen der Hauptverbindung Session-AB möglich.

Über beispielsweise den zusätzlichen Kopfabschnitteintrag oder Kopfabschnitt "Correlate-Method" kann die parallele bzw. korrelierte Verbindung Session-P31 bzw. Session-P35 dazu verwendet werden, Nachrichten anstelle der Hauptverbindung zu transportieren. Diese Nachrichten auf der korrelierten Verbindung Session-P31-bzw. Session-P35 müssen dann von der empfangenden Einrichtung wie eine Nachricht auf der Hauptverbindung Session-AB behandelt werden. Dieser Mechanismus ist ähnlich dem der sogenannten REFER-Methode beim SIP.

Dadurch wird insbesondere auch ein vom Netz initiiertes Verbindungs-Auslösen der Hauptverbindung Session-AB durch ein Netzelement P3 ermöglicht, wie dies dargestellt ist.

Die Verbindung Session-AB zwischen den Endpunkten UA-A und UA-B wird wie beim ersten Ausführungsbeispiel gemäß Fig. 1 aufgebaut.

Wenn eine zwischen diesen Endpunkten UA-A und UA-B liegendes Netzelement P3 zu einem späteren Zeitpunkt P1 erkennt, dass die Verbindung Session-AB auszulösen ist, sendet das Netzelement P3 zwei CORRELATE-Nachrichten aus, eine zum ersten Endpunkt UA-A und eine zum zweiten Endpunkt UA-B. Dazu werden im Prinzip zwei kurzzeitige parallele Verbindungen Session-P3A bzw. Session-P3B aufgebaut, die im einfachsten Fall ohne eine Aufbaubestätigung nur zur einmaligen Übertragung der Auslöseinformation bzw. Auslösenachricht dienen. Die Nachrichten können z.B. aufgebaut sein, wie folgt:
CORRELATE ua-a
From: p3;tag=999
To: ua-a
Call-ID session-P3A
Expires: 0
Correlate-To: ua-a@home1.net;tag=123
Correlate-From: ua-b@home2.net;tag=456
Correlate-Call-ID: session-ab@home1.net
Correlate-Method: BYE

CORRELATE ua-b
From: p3;tag=777
To: ua-b
Call-ID session-P3B
Expires: 0
Correlate-From: ua-a@home1.net;tag=123
Correlate-To: ua-b@home2.net;tag=456
Correlate-Call-ID: session-ab@home1.net
Correlate-Method: BYE

Die CORRELATE-Anweisung gibt eine Verbindungsgrundinformation an, das Feld mit der Gültigkeitsdauer EXPIRES gibt eine verbleibende Gültigkeitsdauer von in diesem Falle 0 an, d.h. eine Anweisung zum sofortigen Beenden der korrelierten Verbindung, und als Korrelierungsverfahren Correlate-Method wird das Auslösen bzw. Beenden der Hauptverbindung mit dem Befehl "BYE" angegeben.

Ein Endpunkt UA-A bzw. UA-B oder ein Netzelement P1 - P5, insbesondere Proxy, das diese Nachricht erhält, soll sie behandeln, als wäre es eine BYE-Nachricht, die direkt für die Hauptverbindung Session-AB empfangen wurden bzw. über die Hauptverbindung Session-AB übertragen wurde. Die CORRELATE-Anweisung wird vorzugsweise von den beiden Endpunkten UA-A und UA-B mit einer abschließenden Antwort bzw. final response beantwortet. Damit wird dann auch die korrelierte Verbindung beendet, da der Gültigkeits-Kopfabschnitt bzw. Expires Header auf den Wert 0 gesetzt wurde, soweit diese korrelierte Verbindung nicht automatisch beendet wird.

Eine praktische Anwendung findet sich beispielsweise im Bereich der Vergebührung von beanspruchten Diensten. Mit der vorstehenden Verfahrensweise ist es bei Netzen mit einem Protokoll für Ende-zu-Ende-Verbindungen durch die Erweiterung nicht mehr zwingend erforderlich, dass alle Funktionen, die direkt auf die Hauptverbindung einwirken können müssen, bei bzw. in den Endpunkten UA-A bzw. UA-B bereit stehen.

Möglich ist z.B. der Einsatz eines Anwendungsservers, der Pre-Paid-Karten und Konten verwaltet. Alle Rufe eines Teilnehmers werden über den Heimat- bzw. Home-Proxy, z.B. ein erstes Netzelement P1, zum Pre-Paid-Server, beispielsweise einem weiteren Netzelement P3, geleitet und von dort wieder zurück zum Home-Proxy, damit dieser die Verbindung gegebenenfalls an weitere Server weiterleiten kann. Möglich ist dabei auch, dass der Pre-Paid-Server selbst nicht die Budgetverwaltung für jeden Ruf des Teilnehmers steuert sondern lediglich den Kontostand bekannt gibt und es dem Home-Proxy erlaubt, Geld von diesem Konto abzubuchen. Dieses Geld kann dann vom Teilnehmer bzw. dessen Station verbraucht werden. Ist das Geld aufgebraucht, fordert der Home-Proxy einen neuen Betrag vom Pre-Paid-Server an. Ist auch dort das Geld bzw. Guthaben verbraucht, teilt dieser dem Home-Proxy mit, den Call auszulösen. Bei diesem Beispiel werden die erweiterten Funktionen des Aufbaus paralleler, korrelierter Verbindungen sowohl zum Verwalten des Guthabens als auch zum Auslösen der Hauptverbindung verwendet.

## Patentansprüche

1. Verfahren zum Durchführen einer Kommunikation zweier Endpunkte als Netzeinrichtungen (UA-A bzw. UA-B) über eine erste Verbindung (Session-AB) in einem Netz auf Basis einer Ende-zu-Ende-Verbindung gemäß dem SIP-Protokoll, welche keine direkten Datenübertragungen durch zumindest eine weitere Netzeinrichtung (P1 - P5) über zumindest Teile der ersten Verbindung (Session-AB) zwischen diesen Endpunkten (UA-A und UA-B) ermöglicht,
**dadurch gekennzeichnet, dass**
- eine weitere Verbindung (Session-P34; Session-P12; Session-P3A, Session-P3B) gemäß dem SIP-Protokoll von einer ersten der Netzeinrichtungen (P3, P1) zu einer zweiten der Netzeinrichtungen (P4, P2, UA-A, UA-B) aufgebaut wird, und die weitere Verbindung mit der ersten Verbindung (Session-AB) korreliert wird,
- wobei eine der Netzeinrichtungen der weiteren Verbindung als Netzeinrichtung auf der ersten Verbindung (Session-AB) zwischen den Endpunkten (UA-A bzw. UA-B) der ersten Verbindung (Session-AB) angeordnet ist,
- beim Aufbau der weiteren Verbindung (Session-P34; Session-P3A, Session-P3B) von der ersten Netzeinrichtung eine Information zum Anfordern einer Korrelierung mit der ersten Verbindung (Session-AB) zur zweiten Netzeinrichtung übertragen wird, und
- die Anforderung der Korrelierung der weiteren Verbindung (Session-P34; Session-P12; Session-P3A, Session-P3B) mit der ersten Verbindung (Session-AB) als erweiterte Kopfabschnittdaten (Correlate-From; Correlate-To; Correlate-Call-ID) oder mit einem eigenständigen Kopfabschnitt (Correlate) von der ersten zur zweiten Netzeinrichtung übertragen wird.

2. Verfahren nach Anspruch 1, bei dem
als weitere Verbindung eine Verbindung eines anderen Verbindungstyps mit der ersten Verbindung (Session-AB) korreliert oder erzeugt und korreliert wird.

3. Verfahren nach einem vorstehenden Anspruch, bei dem
auf der weiteren Verbindung (Session-P3A, Session-P3B) übertragene Nachrichten und Informationen (Correlate-Method) von der empfangenden Netzeinrichtung (UA-A, UA-B) als eine der ersten Verbindung (Session-AB) zugehörige Anweisung behandelt werden.

4. Verfahren nach einem vorstehenden Anspruch, bei dem
auf der weiteren Verbindung (Session-P3A, Session-P3B) übertragene Nachrichten und Informationen (Correlate-Method: BYE) von der empfangenden Netzeinrichtung (UA-A, UA-B) als Anweisung zum Beenden der ersten Verbindung (Session-AB) behandelt werden.

5. Verfahren nach einem vorstehenden Anspruch, bei dem
die weitere Verbindung für die Übertragung von Vergebührungsrelevanten Daten und/oder Anweisungen mit Bezug auf die erste Verbindung als zu vergebührende Verbindung verwendet wird.

6. Netzeinrichtung (P1 - P5) zum Durchführen eines Verfahrens nach einem vorstehenden Anspruch mit
- einer Schnittstelle zum Aufbauen einer weiteren Verbindung zu einer weiteren Netzeinrichtung gemäß dem SIP-Protokoll (Session-P34), wenn eine erste Verbindung (Session-AB) in einem Netz zwischen zwei Endpunkten (UA-A und UA-B) auf Basis einer Ende-zu-Ende-Verbindung gemäß dem SIP-Protokoll besteht, welche Ende-zu-Ende-Verbindung keine direkten Datenübertragungen durch die Netzeinrichtung (P1 - P5) über zumindest Teile der ersten Verbindung (Session-AB) zwischen diesen Endpunkten (UA-A und UA-B) ermöglicht,
**dadurch gekennzeichnet,**
- **dass** die Netzeinrichtung im Betrieb die weitere Verbindung (Session-P34; Session-P12; Session-P3A, Session-P3B) mit der ersten Verbindung (Session-AB) korreliert,
- **dass** die Netzeinrichtung auf der ersten Verbindung (Session-AB) zwischen den Endpunkten (UA-A bzw. UA-B) der ersten Verbindung (Session-AB) angeordnet ist,
- **dass** beim Aufbau der weiteren Verbindung (Session-P34; Session-P3A, Session-P3B) von der Netzeinrichtung eine Information zum Anfordern einer Korrelierung mit der ersten Verbindung (Session-AB) zur weiteren Netzeinrichtung übertragen wird, und
- **dass** die Anforderung der Korrelierung der weiteren Verbindung (Session-P34; Session-P12; Session-P3A, Session-P3B) mit der ersten Verbindung (Session-AB) als erweiterte Kopfabschnittdaten (Correlate-From; Correlate-To; Correlate-Call-ID) oder mit einem eigenständigen Kopfabschnitt (Correlate) von der Netzeinrichtung zur weiteren Netzeinrichtung übertragen wird.

7. Netzeinrichtung nach Anspruch 6, wobei
die Netzeinrichtung als Vorvergebührungs-Server und/oder Heimat-Proxy ausgebildet ist.

## Claims

1. Method for carrying out communication between two terminal points as network devices (UA-A and UA-B) via a first connection (Session-AB) in a network on the basis of an end-to-end connection based on the SIP protocol, which end-to-end connection does not allow direct data transmissions by at least one further network device (P1 - P5) via at least portions of the first connection (Session-AB) between these terminal points (UA-A and UA-B),
**characterized in that**
- a further connection (Session-P34; Session-P12; Session-P3A, Session-P3B) based on the SIP protocol is set up from a first of the network devices (P3, P1) to a second of the network devices (P4, P2, UA-A, UA-B), and the further connection is correlated to the first connection (Session-AB),
- wherein one of the network devices on the further connection is arranged as a network device on the first connection (Session-AB) between the terminal points (UA-A and UA-B) of the first connection (Session-AB),
- setup of the further connection (Session-P34; Session-P3A, Session-P3B) prompts the first network device to transmit a piece of information to request correlation to the first connection (Session-AB) to the second network device, and
- the request for correlation of the further connection (Session-P34; Session-P12; Session-P3A, Session-P3B) to the first connection (Session-AB) is transmitted from the first to the second network device as extended header data (Correlate-From; Correlate-To; Correlate-Call-ID) or with a separate header (Correlate).

2. Method according to Claim 1, in which
the further connection correlated to the first connection (Session-AB) or produced and correlated is a connection of a different connection type.

3. Method according to either of the preceding claims, in which
messages and information (Correlate-Method) transmitted on the further connection (Session-P3A, Session-P3B) are treated by the receiving network device (UA-A, UA-B) as an instruction that is associated with the first connection (Session-AB).

4. Method according to one of the preceding claims, in which
messages and information (Correlate-Method: BYE) transmitted on the further connection (Sesion-P3A; Session-P3B) are treated by the receiving network device (UA-A, UA-B) as an instruction to terminate the first connection (Session-AB).

5. Method according to one of the preceding claims, in which
the further connection is used for transmitting charging-related data and/or instructions with reference to the first connection as a charge-incurring connection.

6. Network device (P1 - P5) for carrying out a method according to one of the preceding claims having
- an interface for setting up a further connection to a further network device based on the SIP protocol (Session-P34) when a first connection (Session-AB) exists in a network between two terminal points (UA-A and UA-B) on the basis of an end-to-end connection based on the SIP protocol, which end-to-end connection does not allow direct data transmissions by the network device (P1 - P5) via at least portions of the first connection (Session-AB) between these terminal points (UA-A and UA-B),
**characterized**
- **in that** the network device correlates the further connection (Session-P34; Session-P12; Session-P3A, Session-P3B) to the first connection (Session-AB) during operation,
- **in that** the network device is arranged on the first connection (Session-AB) between the terminal points (UA-A and UA-B) of the first connection (Session-AB),
- **in that** setup of the further connection (Session-P34; Session-P3A, Session-P3B) prompts the network device to transmit a piece of information to request correlation to the first connection (Session-AB) to the further network device, and
- **in that** the request for correlation of the further connection (Session-P34; Session-P12; Session-P3A, Session-P3B) to the first connection (Session-AB) is transmitted from the network device to the further network device as extended header data (Correlate-From; Correlate-To; Correlate-Call-ID) or with a separate header (Correlate).

7. Network device according to Claim 6, wherein
the network device is in the form of a prepaid-charging server and/or home proxy.

## Revendications

1. Procédé pour exécuter une communication entre deux points terminaux en tant que dispositifs de réseau (resp. UA-A et UA-B) via une première liaison (Session-AB) dans un réseau sur la base d'une liaison de bout en bout conformément au protocole SIP, laquelle ne permet pas de transmissions directes de données par au moins un autre dispositif de réseau (P1 - P5) via au moins des parties de la première liaison (Session-AB) entre ces points terminaux (UA-A et UA-B), **caractérisé en ce que** :
- une autre liaison (Session-P34 ; Session-P12 ; Session P3A, Session P3B) est établie, conformément au protocole SIP, d'un premier des dispositifs de réseau (P3, P1) vers un deuxième des dispositifs de réseau (P4, P2, UA-A, UA-B) et l'autre liaison est corrélée avec la première liaison (Session-AB),
- l'un des dispositifs de réseau de l'autre liaison étant situé en tant que dispositif de réseau sur la première liaison (Session-AB) entre les points terminaux (resp. UA-A et UA-B) de la première liaison (Session-AB),
- lors de l'établissement de l'autre liaison (Session-P34 ; Session-P3A, Session P3B), le premier dispositif de réseau transmet au deuxième dispositif de réseau une information pour demander une corrélation avec la première liaison (Session-AB) et
- la demande de corrélation de l'autre liaison (Session-P34 ; Session-P12 ; Session P3A, Session P3B) avec la première liaison (Session-AB) est transmise sous la forme de données élargies de champ d'en-tête (Correlate-From ; Correlate-To ; Correlate-Call-ID) ou avec un champ d'en-tête autonome (Correlate) du premier au deuxième dispositif de réseau.

2. Procédé selon la revendication 1, selon lequel une liaison d'un autre type de liaison est corrélée avec la première liaison (Session-AB), ou générée et corrélée, en tant qu'autre liaison.

3. Procédé selon une revendication précédente, selon lequel des messages et informations (Correlate-Method) transmis sur l'autre liaison (Session-P3A, Session-P3B) sont traités par le dispositif de réseau récepteur (UA-A, UA-B) en tant qu'instruction associée à la première liaison (Session-AB).

4. Procédé selon une revendication précédente, selon lequel des messages et informations (Correlate-Method : BYE) transmis sur l'autre liaison (Session-P3A, Session-P3B) sont traités par le dispositif de réseau récepteur (UA-A, UA-B) en tant qu'instruction pour terminer la première liaison (Session-AB).

5. Procédé selon une revendication précédente, selon lequel l'autre liaison est utilisée pour la transmission de données et/ou d'instructions pertinentes pour la facturation en référence à la première liaison en tant que liaison à facturer.

6. Dispositif de réseau (P1 - P5) pour exécuter un procédé selon une revendication précédente, comportant :
- une interface pour établir une autre liaison vers un autre dispositif de réseau conformément au protocole SIP (Session-P34) lorsqu'une première liaison (Session-AB) existe dans un réseau entre deux points terminaux (UA-A et UA-B) sur la base d'une liaison de bout en bout conformément au protocole SIP, laquelle liaison de bout en bout ne permet pas de transmissions directes de données par le dispositif de réseau (P1 - P5) via au moins des parties de la première liaison (Session-AB) entre ces points terminaux (UA-A et UA-B),
**caractérisé en ce que** :
- le dispositif de réseau corrèle, en service, l'autre liaison (Session-P34 ; Session-P12 ; Session-P3A, Session-P3B) avec la première liaison (Session-AB) ;
- le dispositif de réseau est situé sur la première liaison (Session-AB) entre les points terminaux (resp. UA-A et UA-B) de la première liaison (Session-AB) ;
- lors de l'établissement de l'autre liaison (Session-P34 ; Session-P3A, Session P3B), le dispositif de réseau transmet à l'autre dispositif de réseau une information pour demander une corrélation avec la première liaison (Session-AB) et
- la demande de corrélation de l'autre liaison (Session-P34 ; Session-P12 ; Session P3A, Session P3B) avec la première liaison (Session-AB) est transmise sous la forme de données élargies de champ d'en-tête (Correlate-From ; Correlate-To ; Correlate-Call-ID) ou avec un champ d'en-tête autonome (Correlate) du dispositif de réseau à l'autre dispositif de réseau.

7. Dispositif de réseau selon la revendication 6, le dispositif de réseau se présentant sous la forme d'un serveur de préfacturation et/ou d'un home proxy.
